**Europäisches Patentamt**

**European Patent Office**

**Office européen des brevets**

(19)

(11) Veröffentlichungsnummer : **0 505 734 A2**

## (12) EUROPÄISCHE PATENTANMELDUNG

(21) Anmeldenummer : **92102955.9**

(22) Anmeldetag : **21.02.92**

(51) Int. Cl.⁵ : **B01D 17/025**, B01D 17/038, B01D 21/26

(30) Priorität : **22.02.91 DE 4105567**

(43) Veröffentlichungstag der Anmeldung :
**30.09.92 Patentblatt 92/40**

(84) Benannte Vertragsstaaten :
**AT BE CH DE FR LI NL**

(71) Anmelder : **PASSAVANT-WERKE AG**
**W-6209 Aarbergen 7 (DE)**

(72) Erfinder : **Weiler, Walter, Dipl.-Ing.**
**Wilhelmstrasse 59**
**W-6252 Diez (DE)**
Erfinder : **Bachon, Ulrich, Dipl.-Ing.**
**Wilhelmstrasse 59**
**W-6252 Diez (DE)**

(54) **Abscheider zum Reinigen von mit Leicht- und Sinkstoffen verschmutzten Abwässern.**

(57)  Ohne Freispiegel arbeitende Schwerkraft-Abscheider für mit vorzugsweise organischen Leicht- und Sinkstoffen verschmutzte Abwässer können dadurch entsorgt werden, daß Zu- und Reinwasserablauf abgesperrt werden und über einen entsprechenden Anschluß ein Druckfördermedium eingebracht wird. Das Medium kann durch Niveau- oder Druckabfallsensoren so dosiert werden, daß die abgetrennte Schmutzstoffcharge vollständig abgefördert wird.

EP 0 505 734 A2

Jouve, 18, rue Saint-Denis, 75001 PARIS

Die Erfindung hat Bezug zu Abscheidern für mit Leicht- und Sinkstoffen verschmutzte Abwässer, die nach dem Schwerkraft- bzw. Dichteunterschiedsprinzip arbeiten und dafür ein im wesentlichen horizontal beruhigt durchströmtes Abscheidergefäß aufweisen.

Insbesondere bei organischen Schmutzstoffen, die schon nach relativ kurzer Zeit in anaerobe Gärung übergehen, ist es wichtig, die abgetrennten Stoffe im frischen und wiederverwertbaren Zustand auszutragen. Die Abscheidegehäuse arbeiten deshalb ohne Freispiegel in der Weise, daß Zulauf und Reinwasserablauf über dem höchsten Punkt des zu einem Leichtstoffaustrag räumlich zusammenziehenden Deckel liegen. Für die Zusammenziehung der Sinkstoffe ist ebenfalls ein konischer Boden mit an der Spitze angeordneter Austragsöffnung vorgesehen.

Die abgetrennten Schmutzstoffe können einfach dadurch ausgetragen werden, daß der Reinwasserablauf geschlossen und die betreffende Abzugsöffnung geöffnet wird. Das danach zulaufende Abwasser bewirkt, daß die Schmutzstoffe in bereitgestellte Lagerbehälter fließen. Das Ende des Austragsvorgangs muß an Schaugläsern beobachtet werden.

Es hat sich gezeigt, daß diese Art des Austrags nicht befriedigt. Die Aufgabe, ein besseres Austragsverfahren anzugeben, wird vorrichtungsgemäß dadurch gelöst, daß auch der Abscheiderzulauf eine Absperreinrichtung und der Abscheider einen Anschluß für eine Druckerzeugungseinrichtung erhält, mit der die abgetrennten Schmutzstoffe bei jeweils geöffnetem Absperrventil ausgetragen werden können. Die Schmutzstoffe werden jetzt mit kontrollierbarem Druck vollständig weggefördert. Als Druckfördermedium kommt Wasser, Gas oder Luft in Frage. Wasser kann z.B. aus dem Trinkwassernetz stammen, das einen ausreichenden Druck zur Verfügung stellt. Um den Vorschriften nach hygienischer Trennung von Trinkwasser und Abwasser zu genügen, wird in Ausgestaltung der Erfindung vorgeschlagen, eine Membran- oder Gaspolster-Trenneinrichtung zwischenzuschalten.

Für dem Fall der Anwendung von Druckluft empfiehlt es sich, einen Speicherbehälter vorzusehen, der von einem Kleinkompressor aufgeladen wird. Es ist aber auch denkbar, einen pneumatisch beaufschlagten Hubkolben einzusetzen, der das erforderliche Fördervolumen an Wasser erzeugt. Ein Hubkolben hat den Vorzug, daß sich aus dem definierten Hub ein ebenfalls genau definiertes Fördervolumen ergibt.

Druckluft wird vorzugsweise in den aufsteigenden Ast des Reinwasserablaufs eingebracht, und zwar direkt unter dem Absperrventil. Wenn dieser Ast erfindungsgemäß auf ein dem Abzugsvolumen entsprechendes Volumen vergrößert wird, dann gelangt kein Fördermedium, insbesondere keine Luft in das Abscheidegefäß. Um dies auszuschließen, wird an der tiefsten Stelle des aufsteigenden Asts ein Sensor eingebaut, der die Druckmedium-Zufuhr sofort abschaltet. Man kann aber auch im Druckfördersystem einen Druckabfall-Sensor vorsehen, der die Zufuhr in dem Augenblick beendet, in dem durch Obertritt von Luft in den Abscheider der Förderdruck schlagartig absinkt.

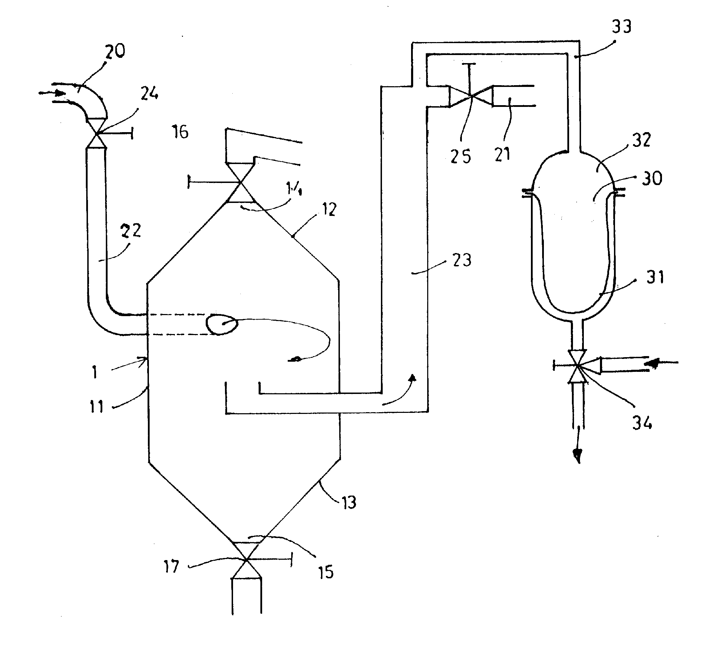

In der Zeichnung ist eine Abscheideranlage nach der Erfindung schematisch dargestellt. Mit 1 ist das Abscheidergehäuse bezeichnet, das aus einem zylindrischen Mittelteil 11 und je einem konischen Deckel 12 und Boden 13 besteht. An den Spitzen der Kegelstümpfe sind die Austragsöffnungen 14, 15 mit Absperrventilen 16, 17 angeordnet.

Zu- und Reinwasser-Ablaufleitung 20, 21 sind über die obere Austragsöffnung 14 für Leichtstoffe hochgezogen. In den vertikal verlaufenden asten 22, 23 dieser Leitungen liegen die Absperrventile 24, 25, die im Fall des Abzugs von Schmutzstoffen geschlossen werden. Der vertikale Ast 23 des Reinwasser-Ablaufs 21 ist volumenmäßig so vergrößert, daß zum Entsorgen einer Schmutzstoffcharge nicht mehr Medium verbraucht wird als in diesem Ast vorrätig ist.

Der ansteigende Ast 23 ist im Abscheiderbetrieb bis zu dem Ventil 25 mit Wasser gefüllt. Nach erfolgter Entsorgung und Wiederöffnen der Ventile füllt sich dieser Ast wieder mit Wasser.

Das Druckmedium wird in einem druckluft- oder trinkwasserbetriebenen Speicherbehälter 30 mit Trennmembran 31 zur Verfügung gestellt. In dem über der Membran liegenden Raum 32 und der Druckleitung 33 befindet sich ein Luftpolster. Das Trinkwasser wird über ein Drei-Wege-Ventil 34 zugeführt. Nach Beendigung des Entsorgungsvorgangs wird das verwendete Wasser über den 3. Zweig des Drei-Wege-Ventils 34 abgelassen. Die Membran kehrt dadurch in ihre Ausgangslage zurück. Membran und Luftpolster sind eine doppelte Sicherheit gegen Rückverseuchung aus dem Abwasser.

**Patentansprüche**

1. Abscheider zum Reinigen von mit Leicht- und Sinkstoffen verschmutztem Abwässern, mit einem im wesentlichen horizontal durchflossenen, ohne Freispiegel betriebenen Abscheidergefäß, das einen zu Abzugsöffnungen für die abgetrennten Leicht- und Sinkstoffe führenden, räumlich zusammenziehenden Deckel und Boden aufweist, und wobei der Reinwasserablauf absperrbar ist, **dadurch gekennzeichnet,**

daß der Abscheider (1) eine Absperreinrichtung (24) im Zulauf (20) und einen Anschluß (33) für ein Druckerzeugungseinrichtung (30) aufweist, mit der die abgetrennten Stoffe bei jeweils geöffnetem Absperrventil (16, 17) ausgetragen werden.

2. Abscheider nach Anspuch 1, **gekennzeichnet** durch eine Drucklufterzeugungseinrichtung in Form eines Druckluft-Speicherbehälters (30).

3. Abscheider nach Anspruch 2, **dadurch gekennzeichnet**, daß der Speicherbehälter (30) eine von Druckluft einseitig beaufschlagte Trennmembran (31) enthält.

4. Abscheider nach Anspruch 1, **gekennzeichnet** durch eine Druckwasser-Erzeugungseinrichtung.

5. Abscheider nach Anspruch 4, **dadurch gekennzeichnet**, daß eine mechanische Verdrängungseinrichtung in Form eines hydraulisch oder pneumatisch betriebenen Hubkolbens vorgesehen ist.

6. Abscheider nach Anspruch 4, **dadurch gekennzeichnet**, daß die Druckwasser-Erzeugungseinrichtung das Trinkwasser-Leitungsnetz ist.

7. Abscheider nach Anspruch 6, **dadurch gekennzeichnet**, daß zwischen Trinkwasser-Leitungsnetz und Abscheider eine Membran- oder Gaspolster-Trenneinrichtung (30) eingeschaltet ist.

8. Abscheider nach Anspruch 1 bis 7, **dadurch gekennzeichnet**, daß der Anschluß (33) für die Druckerzeugungseinrichtung (30) im aufsteigenden Ast (23) des Reinwasser-Ablaufs (21) unter dem Absperrventil (25) liegt.

9. Abscheider nach Anspruch 8, **gekennzeichnet** durch einen am Übergang in den waagerechten Ast des Reinwasser-Ablaufs angeordneten Sensor zum Beenden der Druckmedium-Zufuhr.

10. Abscheider nach Anspruch 8, **gekennzeichnet** durch eine Druckabfall-Meßeinrichtung für die Beendigung der Druckmittel-Zufuhr.

11. Abscheider nach Anspruch 8, **dadurch gekennzeichnet**, daß der das Druckmedium aufnehmende Ast (23) des Reinwasser-Ablaufs (21) volumenmäßig bis auf ein dem abzuziehenden Volumen entsprechen-des Volumen vergrößert ist.